(19) Europäisches Patentamt

European Patent Office

Office européen des brevets

(11) **EP 3 046 326 A1**

(12) **EUROPEAN PATENT APPLICATION**

(43) Date of publication:
**20.07.2016 Bulletin 2016/29**

(21) Application number: **15305028.1**

(22) Date of filing: **15.01.2015**

(51) Int Cl.:
*H04N 19/105* (2014.01)   *H04N 19/176* (2014.01)
*H04N 19/593* (2014.01)   *H04N 19/154* (2014.01)
*H04N 19/192* (2014.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicants:
• **Thomson Licensing**
**92130 Issy-les-Moulineaux (FR)**
• **INRIA - Institut National de Recherche en Informatique et en Automatique**
**78150 Le Chesnay (FR)**

(72) Inventors:
• **Turkan, Mehmet**
**35576 Cesson-Sévigné (FR)**

• **Thoreau, Dominique**
**35576 Cesson-Sévigné (FR)**
• **Guillotel, Philippe**
**35576 Cesson-Sévigné (FR)**
• **Alain, Martin**
**35576 Cesson-Sévigné (FR)**
• **Guillemot, Christine**
**35042 RENNES (FR)**

(74) Representative: **Huchet, Anne**
**Technicolor**
**1, rue Jeanne d'Arc**
**92443 Issy-les-Moulineaux Cedex (FR)**

(54) **Method and device of construction of an epitome, coding and decoding methods and coding and decoding devices**

(57)     A method of construction of an epitome of an image is disclosed. The method comprises at least one iteration of:
- determining (120) for each of at least two patches the number of blocks of said image reconstructed by an extended epitome formed by a current epitome and the patch, wherein a block is reconstructed by the extended epitome when a distance between the block and a weighted linear combination of patches of the extended epitome is below a threshold value;
- adding (122) to the current epitome the patch, among the at least two patches, that reconstructs the highest number of blocks.

FIGURE 3

EP 3 046 326 A1

**Description**

1. TECHNICAL FIELD

In the following, a method and a device for constructing an epitome of an image are disclosed. Encoding and decoding methods of the image using the constructed epitome are also disclosed. Corresponding encoding and decoding devices are further disclosed.

2. BACKGROUND ART

An epitome of an image is its condensed representation containing the essence of the textural and structure properties of the image. Representing an image with its epitome aims at reducing redundant information (texture) in the image by exploiting repeated content within the image.
In general, the repeating patterns (texture patches) are selected and removed from the image using simple block-matching algorithm. In these case, the image is described by its epitome and a transform (or correspondence or assignment) map. The epitome is usually composed of disjoint pieces of texture called epitome charts. Each epitome chart corresponds to a specific region in the image. The set of all the epitome charts forms the epitome. When using block-matching algorithm, only translations can be represented in the transform map. Using a KLT tracking algorithm instead of a simple block matching algorithm helps to represent other geometrical transformations (e.g. rotation, scaling, etc). However, in this case, the transform map has to indicate information (e.g. rotation angles, scaling factors, etc) on these geometrical transformations. This solution is time consuming. In addition, the side-information (the transform map) may be large which is a drawback for coding applications.

3. BRIEF SUMMARY

A method of construction of an epitome of an image is disclosed that comprises at least one iteration of:

- determining for each of at least two patches of the image the number of blocks of the image reconstructed by an extended epitome formed by a current epitome and the patch, wherein a block is reconstructed by the extended epitome when a distance between the block and a weighted linear combination of patches of the extended epitome is below a threshold value,;
- adding to the current epitome the patch, among the at least two patches, that reconstructs the highest number of blocks.

In a first embodiment, determining for each of at least two patches of the image the number of blocks of the image reconstructed by the extended epitome comprises, for at least one block of the image, determining k weights and k patches of a weighted linear combination of k-nearest neighboring patches to the at least one block of the image so as to minimize a reconstruction error of the at least one block of the image while minimizing the value of k.
In a second embodiment, the image being a high resolution image, determining for each of at least two patches of the high resolution image the number of blocks of the high resolution image reconstructed by the extended epitome comprises, for at least one block of the high resolution image, determining k weights and k patches of a weighted linear combination of k-nearest neighboring patches to an LR block in a low resolution image co-located with the at least one block of the high resolution image so as to minimize a reconstruction error of the LR block while minimizing the value of k, the low resolution image being a low resolution version of the high resolution image.
In a third embodiment, determining for each of at least two patches of the image the number of blocks of the image reconstructed by the extended epitome comprises, for at least one block of the image, determining k weights and k templates of a weighted linear combination of k-nearest neighboring templates to a template adjacent to the at least one block of the image so as to minimize a reconstruction error of the template while minimizing the value of k.
A method of coding is also disclosed that comprises:

- determining for each of at least two patches of the image the number of blocks of the image reconstructed by an extended epitome formed by a current epitome and the patch, wherein a block is reconstructed by the extended epitome when a distance between the block and a weighted linear combination of patches of the extended epitome is below a threshold value,;
- adding to the current epitome the patch, among the at least two patches, that reconstructs the highest number of blocks.
- encoding the epitome.

In an exemplary embodiment, the image being a high resolution image, the method further comprises encoding a low resolution version of the high resolution image.

In another exemplary embodiment, the method of coding further comprises for at least one block:

- determining k patches in the epitome and k weights of a weighted linear combination of k-nearest neighboring patches to the block so as to minimize a reconstruction error of the at least one block while minimizing the value of k; and
- encoding the k weight and k indices identifying the k patches of the weighted linear combination.

A method of decoding is also disclosed that comprises:

- decoding an epitome of patches representative of an image;
- determining, for at least one block of the image, k weights and k patches of the decoded epitome, wherein k is an integer; and
- determining a weighted linear combination of the k patches using the k weights, the weighted linear combination of the k patches forming the decoded block.

In a specific embodiment, determining, for at least one block of the image, k weights and k patches of the decoded epitome comprises decoding the k weights and k indices identifying the k patches from a bitstream.

In another embodiment, determining, for at least one block of the image, k weights and k patches of the decoded epitome comprises :

- determining k weights and k templates of a weighted linear combination of k-nearest neighboring templates of the decoded epitome to a template adjacent to the at least one block of the image so as to minimize a reconstruction error of the template while minimizing the value of k;
- determining k patches in the decoded epitome adjacent to the k-nearest neighboring templates, the patches forming the k patches.

In another embodiment, the image being a high resolution image, the method further comprises:

- decoding a low resolution image being a low resolution version of the high resolution image ;
- determining an LR epitome of patches for the low resolution image from the decoded epitome of patches;

wherein determining, for at least one block of the high resolution image, k weights and k patches of the decoded epitome comprises:

- determining k weights and k patches of a weighted linear combination of k-nearest neighboring patches to an LR block in the low resolution image co-located with the at least one block of the high resolution image so as to minimize a reconstruction error of the LR block while minimizing the value of k;
- determining k patches in the decoded epitome co-located to the k LR patches, the patches forming the k patches.

A device for constructing an epitome of an image is disclosed that comprises at least one processor configured to:

- determine for each of at least two patches of the image the number of blocks of the image reconstructed by an extended epitome formed by a current epitome and the patch, wherein a block is reconstructed by the extended epitome when a distance between the block and a weighted linear combination of patches of the extended epitome is below a threshold value;
- add to the current epitome the patch, among the at least two patches, that reconstructs the highest number of blocks.

The device is configured to execute the steps of the method for constructing an epitome according to any of the embodiments and variants disclosed.

A coding device is disclosed that comprises at least one processor configured to:

- determine for each of at least two patches of the image the number of blocks of the image reconstructed by an extended epitome formed by a current epitome and the patch, wherein a block is reconstructed by the extended epitome when a distance between the block and a weighted linear combination of patches of the extended epitome is below a threshold value;
- add to the current epitome the patch, among the at least two patches, that reconstructs the highest number of blocks;

and
- encode the epitome.

A decoding device is disclosed that comprises at least one processor configured to:

- decode an epitome of patches representative of an image;
- determine, for at least one block of the image, k weights and k patches of the decoded epitome, wherein k is an integer; and
- determine a weighted linear combination of the k patches using the k weights, the weighted linear combination of the patches forming the decoded block.

A computer program product comprising program code instructions to execute a method of construction of an epitome of an image when this program is executed on a computer, said method comprising:

- determining for each of at least two patches of the image the number of blocks of the image reconstructed by an extended epitome formed by a current epitome and the patch, wherein a block is reconstructed by the extended epitome when a distance between the block and a weighted linear combination of patches of the extended epitome is below a threshold value,;
- adding to the current epitome the patch, among the at least two patches, that reconstructs the highest number of blocks.

A processor readable medium having stored therein instructions for causing a processor to perform at least:

- determining for each of at least two patches of the image the number of blocks of the image reconstructed by an extended epitome formed by a current epitome and the patch, wherein a block is reconstructed by the extended epitome when a distance between the block and a weighted linear combination of patches of the extended epitome is below a threshold value,;
- adding to the current epitome the patch, among the at least two patches, that reconstructs the highest number of blocks.

A computer program product comprising program code instructions to execute an encoding method when this program is executed on a computer, the encoding method comprising:

- determining for each of at least two patches of the image the number of blocks of the image reconstructed by an extended epitome formed by a current epitome and the patch, wherein a block is reconstructed by the extended epitome when a distance between the block and a weighted linear combination of patches of the extended epitome is below a threshold value,;
- adding to the current epitome the patch, among the at least two patches, that reconstructs the highest number of blocks.
- encoding the epitome.

A processor readable medium having stored therein instructions for causing a processor to perform at least:

- determining for each of at least two patches of the image the number of blocks of the image reconstructed by an extended epitome formed by a current epitome and the patch, wherein a block is reconstructed by the extended epitome when a distance between the block and a weighted linear combination of patches of the extended epitome is below a threshold value,;
- adding to the current epitome the patch, among the at least two patches, that reconstructs the highest number of blocks.
- encoding the epitome.

A computer program product comprising program code instructions to execute a decoding method when this program is executed on a computer, said decoding method comprising:

- decoding an epitome of patches representative of an image;
- determining, for at least one block of the image, k weights and k patches of the decoded epitome, wherein k is an integer; and
- determining a weighted linear combination of the k patches using the k weights, the weighted linear combination of the k patches forming the decoded block.

A processor readable medium having stored therein instructions for causing a processor to perform at least:

- decoding an epitome of patches representative of an image;
- determining, for at least one block of the image, k weights and k patches of the decoded epitome, wherein k is an integer; and
- determining a weighted linear combination of the k patches using the k weights, the weighted linear combination of the k patches forming the decoded block.

4. BRIEF SUMMARY OF THE DRAWINGS

- Figure 1 depicts a block aligned on a block grid and a patch aligned on a pixel grid;
- Figure 2 represents an exemplary architecture of a device configured to construct an epitome of an image according to an exemplary and non-limiting embodiment;
- Figure 3 represents a flowchart of a method for constructing an epitome of an image according to a first specific and non-limiting embodiment;
- Figure 4 represents a flowchart of a method of coding an image in a bitstream according to a specific and non-limiting embodiment;
- Figure 5 represents a flowchart of a method of decoding an image according to a specific and non-limiting embodiment;
- Figure 6 represents a flowchart of a method for constructing an epitome of a high resolution image (HR image in the following) according to a second specific and non-limiting embodiment;
- Figure 7 represents a flowchart of a method of coding a HR image in a bitstream according to a specific and non-limiting embodiment;
- Figure 8 represents a flowchart of a method of decoding an HR image according to a specific and non-limiting embodiment;
- Figure 9 represents a flowchart of a method for constructing an epitome of an image according to a third specific and non-limiting embodiment;
- Figure 10 represents a depicts a block aligned on a block grid and a patch aligned on a pixel grid with their respective templates;
- Figure 11 represents a flowchart of a method of coding an image in a bitstream according to a specific and non-limiting embodiment;
- Figure 12 depicts a flowchart of a method for decoding an image according to a specific and non-limiting embodiment;
- Figure 13 represents an exemplary architecture of an encoding device configured to encode an image into a bitstream according to an exemplary and non-limiting embodiment;
- Figure 14 represents an exemplary architecture of a decoding device configured to decode an image from a bitstream according to an exemplary embodiment;
- Figure 15 further illustrates the HR image decoding method; and
- Figure 16 further illustrates the decoding method of Figure 12.

5. DETAILED DESCRIPTION

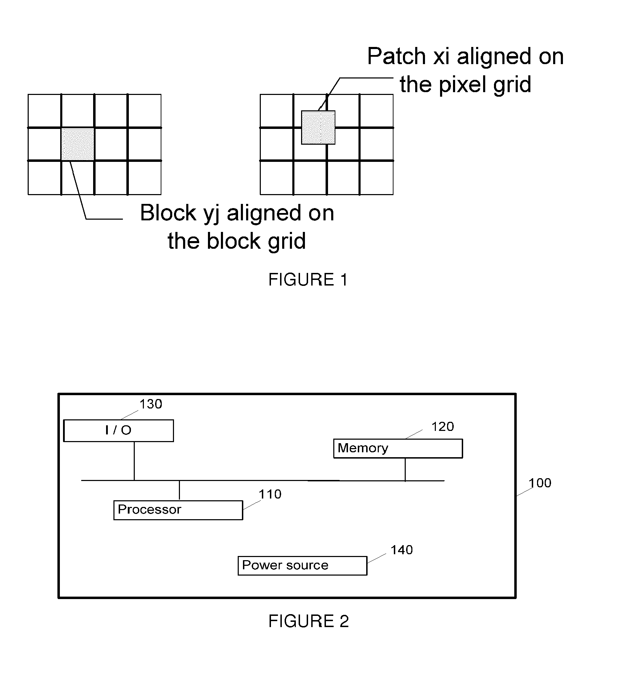

The epitome of an image is its miniature, condensed version containing the essence of the textural and structure properties of the image. In the following a block is a block of pixels aligned on a block grid and a patch is a block of pixels aligned on a pixel grid as depicted on figure 1. On this figure, the thick vertical and horizontal lines delimit the blocks in the image. yj is a block because aligned on the block grid while xi is a patch because it is aligned on the pixel grid. yj is also a patch because the set of patches comprise all the blocks. The block grid is advantageously the one defined in block-based encoding algorithms.

**Figure 2** represents an exemplary architecture of a device 100 configured to construct an epitome of an image according to an exemplary and non-limiting embodiment. The device 100 comprises one or more processor(s) 110, which could comprise, for example, a CPU, a GPU and/or a DSP (English acronym of Digital Signal Processor), along with internal memory 120 (e.g. RAM, ROM, and/or EPROM). The device 100 comprises one or more Input/Output interface(s) 130, each adapted to display output information and/or allow a user to enter commands and/or data (e.g. a keyboard, a mouse, a touchpad, a webcam); and a power source 140 which may be external to the device 100. The device 100 may also comprise one or more network interface(s) (not shown). The image may be obtained from a source.

According to different embodiments, the source can be, but is not limited to:

- a local memory, e.g. a video memory, a RAM, a flash memory, a hard disk ;
- a storage interface, e.g. an interface with a mass storage, a ROM, an optical disc or a magnetic support;
- a communication interface, e.g. a wireline interface (for example a bus interface, a wide area network interface, a local area network interface) or a wireless interface (such as a IEEE 802.11 interface or a Bluetooth interface); and
- an image capturing circuit (e.g. a sensor such as, for example, a CCD (or Charge-Coupled Device) or CMOS (or Complementary Metal-Oxide-Semiconductor)).

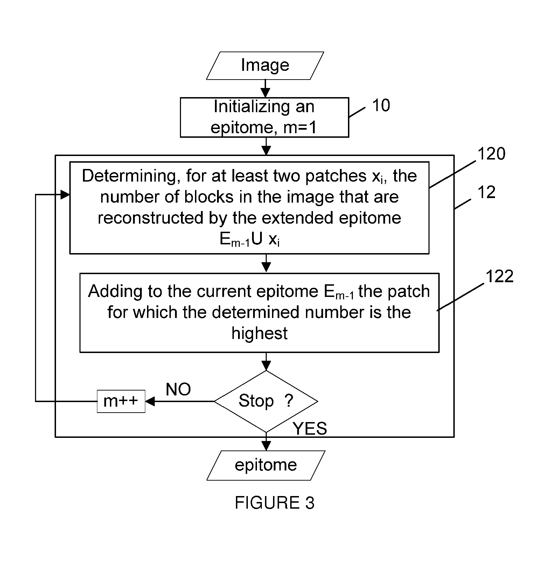

According to different embodiments, the epitome may be sent to a destination. As an example, the epitome is stored in a remote or in a local memory, e.g. a video memory or a RAM, a hard disk. In a variant, the epitome is sent to a storage interface, e.g. an interface with a mass storage, a ROM, a flash memory, an optical disc or a magnetic support and/or transmitted over a communication interface, e.g. an interface to a point to point link, a communication bus, a point to multipoint link or a broadcast network. According to an exemplary and non-limiting embodiment, the device 100 further comprises a computer program stored in the memory 120. The computer program comprises instructions which, when executed by the device 100, in particular by the processor 110, enable the device 100 to execute the method described with reference to figure 3 or 6 or 9. According to a variant, the computer program is stored externally to the device 100 on a non-transitory digital data support, e.g. on an external storage medium such as a HDD, CD-ROM, DVD, a read-only and/or DVD drive and/or a DVD Read/Write drive, all known in the art. The encoding device 100 thus comprises a mechanism to read the computer program. Further, the encoding device 100 could access one or more Universal Serial Bus (USB)-type storage devices (e.g., "memory sticks.") through corresponding USB ports (not shown).

According to exemplary and non limiting embodiments, the device 100 can be, but is not limited to:

- a mobile device ;
- a communication device ;
- a game device ;
- a tablet (or tablet computer) ;
- a laptop ;
- a still image camera;
- a video camera ;
- an encoding chip;
- a still image server; and
- a video server (e.g. a broadcast server, a video-on-demand server or a web server).

**Figure 3** represents a flowchart of a method for constructing an epitome of an image according to a first specific and non-limiting embodiment. The method start with an empty epitome $E_0$ that is progressively filled with patches taken from the image. The epitome has the same spatial resolution as the image.

In step 10, the epitome is initialized by at least one patch $x_i$ aligned on the pixel grid of the image. The epitome may be initialized by a specific patch of the image, e.g. a center patch. In a variant, the epitome is initialized by a patch of the image that reconstructs a maximum number of blocks in the image. A block in the image is reconstructed by a patch taken from the image when a distance, e.g. L2 norm, between the block and the patch is below a threshold value. The distance is representative of the similarity between the block and the patch. The smaller the distance, the more similar the block and the patch. In an exemplary embodiment, the epitome is initialized by the patch $e_1$ determined as follows:

$$e_1 = \arg\max_{x_i} \left[ card \left( \left\| y_j - x_i \right\|_2^2 \leq \varepsilon_1 \right) \right]$$

or

$$e_1 = \arg\max_{x_i} \left[ card \left( \left\| y_j - x_i \right\|_2^2 + \lambda R \leq \varepsilon_2 \right) \right]$$

where yj is a block of the image, xi is a patch of the image, $\varepsilon_1$ and $\varepsilon_2$ are threshold values, R is a coding cost and $\lambda$ is a Lagrangian multiplier. Specifically R is the cost (i.e. in terms of bitrate) of residual encoding. Indeed, in addition to the epitome, residuals may be encoded. A residual is a difference between an original pixel value and its prediction value.

The prediction value is obtained from the epitome. Coding the residuals usually comprises transforming them into coefficients (e.g. by applying a DCT), quantizing the coefficients and entropy coding the quantized coefficients. R may thus be estimated from the number of non-zero quantized coefficients as R=6.5*M where M is the number of non-zero quantized coefficients. The optimum value of $\lambda$ is a function of the uniform quantization step-size applied on the coefficients. It will be appreciated, however, that the present principles are not restricted to the L2-norm. Therefore, in the above equation L2-norm may be replaced by another distance. Card() is a function that gives the number of blocks yi that verify the inequality in parenthesis. Basically, the epitome is initialized by the patch $e_1$ that reconstructs the highest number of blocks in the image. A block yj is reconstructed by a patch xi when one of the above inequality is satisfied. It will be appreciated, however, that the present principles are not restricted to any specific method of initialization.

In step 12, the epitome is extended. Epitome extension is an iterative process. During one iteration m, one patch of the image is added to the current epitome $E_{m-1}$, i.e. the epitome obtained at previous iteration. Extending the epitome comprises adding to the current epitome one patch between at least two candidate patches that are not already in the current epitome. For each of the two candidate patches, the number of blocks in the image that are reconstructed by the extended epitome is determined in a step 120. A block is reconstructed by the extended epitome when a distance, e.g. L2-norm, between the block and a weighted linear combination of k-nearest neighboring patches of the extended epitome is below a threshold value, where k is an integer. The reconstruction error may further take into account the coding cost R. The patch (among the at least two candidate patches) for which the determined number is the highest is added to the current epitome in a step 122. In a further embodiment, the patch to be added to the current epitome is selected among all patches not already in the current epitome.

In a specific embodiment, determining (step 120), for each of the two candidate patches, the number of blocks reconstructed by an extended epitome comprises, for at least one block of the image, determining weights and patches of the weighted linear combination of k-nearest neighboring patches so as to minimize the reconstruction error while minimizing the value of k.

In an exemplary embodiment, a patch $e_m$ from the image to be added to the current epitome $E_{m-1}$ is determined as follows:

$$e_m = \arg\max_{x_i, x_i \notin E_{m-1}} \left[ card\left( \left\| y_j - \sum_k w_k \, kNN_{y_j}\left[ E_{m-1} \cup x_i \right] \right\|_2^2 \le \varepsilon_1 \right) \right] \quad (1)$$

or

$$e_m = \arg\max_{x_i, x_i \notin E_{m-1}} \left[ card\left( \left\| y_j - \sum_k w_k \, kNN_{y_j}\left[ E_{m-1} \cup x_i \right] \right\|_2^2 + \lambda R \le \varepsilon_2 \right) \right]$$

where the weights $w_k$ and patches are determined as follows:

$$\arg\min_{w_k, x_i \notin E_{m-1}} \left\| y_j - \sum_k w_k \, kNN_{y_j}\left[ E_{m-1} \cup x_i \right] \right\|_2^2 + \beta \left\| 1 - \sum_k w_k \right\|_2^2 \text{ and subject to } \min |k| \quad (2)$$

In a variant, the weights $w_k$ are determined as follows:

$$\arg\min_{w_k, x_i \notin E_{m-1}} \left\| y_j - \sum_k w_k \, kNN_{y_j}\left[ E_{m-1} \cup x_i \right] \right\|_2^2 + \alpha R + \beta \left\| 1 - \sum_k w_k \right\|_2^2 \text{ and subject to } \min |k| \quad (2')$$

In the above equations, $e_m$ is the patch to be added, $E_{m-1}$ is the current epitome, $kNN_{yj}$ denotes the k-nearest neighboring patches to block $y_j$ determined from the extended epitome $E_{m-1} \cup x_i$ by a kNN search, xi is a candidate patch, $w_k$ are weights of the weighted linear combination of k-nearest neighboring patches, $\varepsilon_1$ and $\varepsilon_2$ are threshold values, R is a coding cost and $\lambda$, $\alpha$, $\beta$ are Lagrangian multipliers. The above minimization problem may be solved by a greedy and iterative method using LLE method (Locally Linear Embedding) or any kind of least squares method.

**Algorithm for solving the above minimization problem**

A k-NN set of $y_j$ is selected from $[E_{m-1} \cup x_i]$ and weights $w_k$ are calculated as disclosed below. All patches in the epitome $[E_{m-1} \cup x_i]$ are supposed to be represented as column vectors in a set $\{Z_q\}$.

**Input** : $\{Z_q\}$, $y_j$, K (allowed max number of selected patches)
**Output:** Selected k-NN set A of $y_j$ and weights $w_k$ according to optimization (2).

Initialization: k = 0, A = [ ], $e_0 = \left\| y_j \right\|_2^2$

while k<K

k=k+1

$q_k = argmin_q \left\| y_j - [A \quad Z_q]w \right\|_2^2 + \beta \left\| 1 - \sum_k w_k \right\|_2^2$

where $w = [w_1 \; .... \; w_k]^T$ and is solved for w with LLE

$e_k = \left\| y_j - [A \quad Z_{q_k}]w \right\|_2^2$

if $e_k \geq e_{k-1}$

stop while-loop

endIf

$A = [A \quad Z_{q_k}]$

endWhile

return A and the associated weights in w calculated with LLE
The output matrix A contains (in its columns) the k-NN set of $y_j$ from $[E_{m-1} \cup x_i]$ according to the optimization (2). The these patches in A and weights in w are used to calculate (1) or its variant.
In equations (2) and (2'), the first term is representative of a reconstruction error of the block $y_j$ by its k nearest neighboring patches. This first term may also take into account an encoding rate R as in equation (2'). The second term is a sum-to-one constraint on the weights $w_k$ which enforces the reconstruction of the block to have a pixel range identical to the original pixel range (e.g [0;255]), and also the invariance to translations. The last term (min|k|) imposes to use as few patches as possible to obtain a sparse epitome (sparsity constraint) and imposes to use as few as possible patches for the reconstruction of $y_j$.
The above process may be repeated either until all blocks of the image are reconstructed with the above

criterion (i.e. $\left\| y_j - \sum_k w_k \, kNN_{y_j}[E_{m-1} \cup x_i] \right\|_2^2 \leq \varepsilon_1$ or $\left\| y_j - \sum_k w_k \, kNN_{y_j}[E_{m-1} \cup x_i] \right\|_2^2 + \lambda R \leq \varepsilon_2$), or until

adding new patches to the current epitome does not increase the number of reconstructed blocks.
If all blocks of the image are reconstructed according to the above criterion, the method stops with the current epitome. If adding new patches from the image to the epitome does not increase the number of reconstructed blocks, the blocks of the image not reconstructed with the current epitome are added to this current epitome. In this latter case, repeating texture patterns (which some of them might be unnecessary) may be included in the epitome. They may be eliminated in an optional step wherein the above method is applied using the patches of the current epitome instead of the patches of the image.

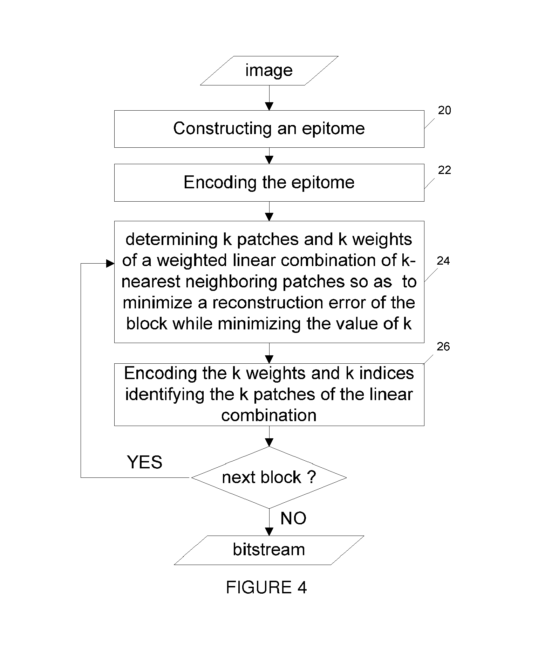

**Figure 4** represents a flowchart of a method of coding an image in a bitstream according to a specific and non-limiting embodiment.
In step 20, an epitome is constructed for the image according to the method disclosed with respect to figure 3.
In step 22, the epitome is encoded. The epitome may be encoded using block-based encoding. Block-based encoding may comprise block prediction and residual coding (transform, quantization and entropy coding). The epitome may be block aligned before coding using padding techniques. It will be appreciated, however, that the present principles are not restricted by the way the epitome is encoded. In step 24, for at least one block in the image, k patches in the epitome and k weights of a weighted linear combination of k-nearest neighboring patches is determined so as to minimize a reconstruction error of the block while minimizing the value of k. The k patches and the k weights are thus determined from the at least one block and from the epitome of patches by applying equations (2) or (2'). The coding cost R of encoding may be taken into account as in equation (2').

In step 26, for the at least one block, the k weights and k indices identifying the k patches determined at step 24 are encoded.

Optionally, the block is predicted from the epitome. The prediction is equal to the weighted linear combination determined with the weights and with the patches identify by the indices determined at step 24 and encoded at step 26. Residuals are encoded, wherein the residuals are computed between the block of the image and a prediction. Coding the residuals usually comprises transforming them into coefficients (e.g. by applying a DCT), quantizing and entropy coding.

The steps 24 and 26 may be repeated with a next block until the whole image is encoded.

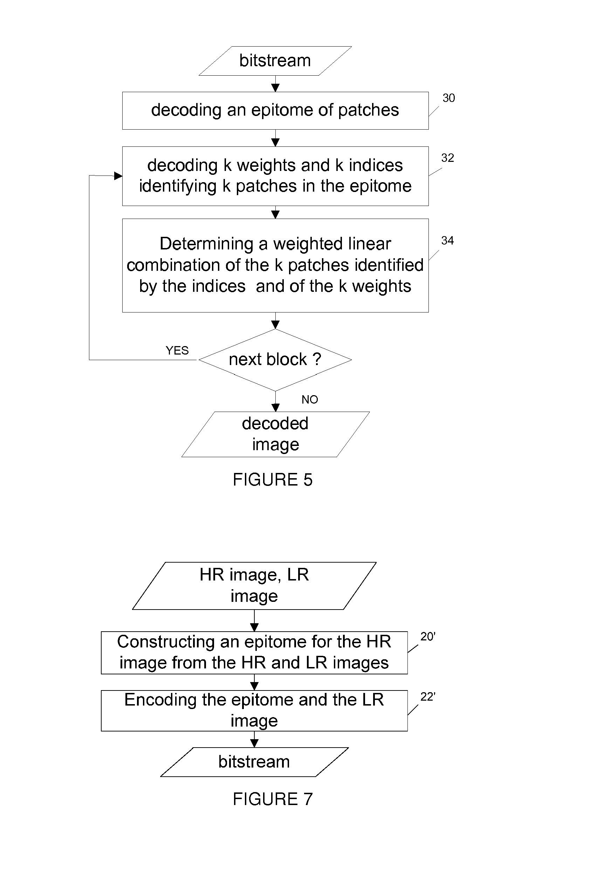

**Figure 5** represents a flowchart of a method of decoding an image according to a specific and non-limiting embodiment.

In step 30, an epitome of patches is decoded. Decoding may comprise residual decoding (entropy decoding, inverse quantization and inverse transform) and adding a prediction. This step is the inverse of step 22 of the encoding method.

In step 32, for at least one block, k indices are determined that identifies k patches of the decoded epitome, namely the indices encoded at step 26. k weights are also determined, namely the weights encoded at step 26. In the embodiment, the indices and the weights are decoded from a bitstream.

In step 34, a weighted linear combination of the k patches identified by the indices and of the determined weights is determined, the weighted linear combination of the k patches forming the decoded block. Optionally, residuals may be added to the weighted linear combination of the k patches if it was encoded, the weighted linear combination of the k patches added to the residuals forming the decoded block. The steps 32 and 34 may be repeated until the whole image is decoded.

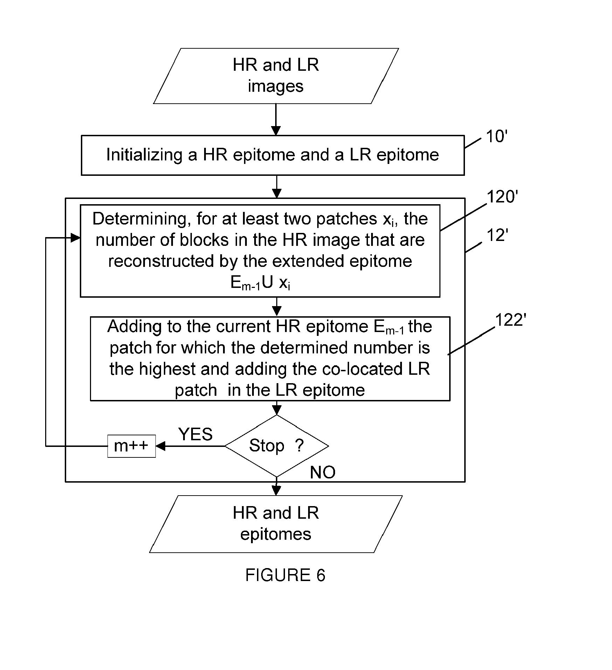

**Figure 6** represents a flowchart of a method for constructing an epitome of a high resolution image (HR image in the following) according to a second specific and non-limiting embodiment. The method start with an empty epitome $E_0$ (HR epitome) that is progressively filled with patches taken from the HR image. The epitome $E_0$ has the same spatial resolution as the HR image. An empty epitome $E'_0$ (LR epitome) is also progressively filled with patches taken from a low resolution version of the HR image (LR image in the following). The LR image may be determined by subsampling the HR image. The epitome $E'_0$ has the same spatial resolution as the LR image.

In step 10', the HR epitome is initialized by at least one patch $x_i$ aligned on the pixel grid of the HR image. The epitome may be initialized by a specific patch of the HR image, e.g. a center patch. In a variant, the epitome is initialized by a patch of the HR image that reconstructs a maximum number of blocks in the HR image. A block in the HR image is reconstructed by a patch taken from the HR image when a distance, e.g. L2 norm, between the block and the patch is below a threshold value. The distance is representative of the similarity between the block and the patch. The smaller the distance, the more similar the block and the patch. In an exemplary embodiment, the epitome is initialized by the patch $e_1$ determined as follows:

$$e_1 = \arg\max_{x_i}\left[ card\left(\left\|y_j - x_i\right\|_2^2 \le \varepsilon_1\right)\right]$$

or

$$e_1 = \arg\max_{x_i}\left[ card\left(\left\|y_j - x_i\right\|_2^2 + \lambda R \le \varepsilon_2\right)\right]$$

where yj is a block of the HR image, xi is a patch of the HR image, $\varepsilon_1$ and $\varepsilon_2$ are threshold values, R is a coding cost and $\lambda$ is a Lagrange multiplier. Specifically R is the cost (i.e. in terms of bitrate) of residual encoding. Indeed, in addition to the epitome residuals may be encoded. A residual is a difference between an original pixel value and its prediction value, i.e. this prediction is determined from the epitome. Coding the residuals usually comprises transforming them into coefficients (e.g. by applying a DCT), quantizing the coefficients and entropy coding the quantized coefficients. R may thus be estimated from the number of non-zero quantized coefficients as R=6.5*M where M is the number of non-zero quantized coefficients. The optimum value of $\lambda$ is a function of the uniform quantization step-size applied on the coefficients. It will be appreciated, however, that the present principles are not restricted to the L2-norm. Therefore, in the above equation L2-norm may be replaced by another distance. Card() is a function that gives the number of blocks yi that verify the inequality in parenthesis. Basically, the epitome is initialized by the patch $e_1$ that reconstructs the highest number of blocks in the HR image. A block yj is reconstructed by a patch xi when one of the above inequality is satisfied.

It will be appreciated, however, that the present principles are not restricted to any specific method of initialization. In addition, the LR epitome representative of the LR image is initialized by the patch $x'_i$ of the LR image collocated with the patch $e_1$. A patch (respectively a block) in the LR image is co-located with a patch (respectively a block) in the HR image when it has the same spatial position while taking into account the upscaling ratio of size between the LR and HR images. Optionally, the LR image may be interpolated (by bicubic or Lanczos interpolation filters, ...) in order that it has the same spatial resolution than the HR image. In the matter case, r1=r2=1.

In step 12', the HR epitome is extended. Epitome extension is an iterative process. During one iteration m, one patch of the HR image is added to the current epitome $E_{m-1}$, i.e. the epitome determined at previous iteration. Extending the epitome comprises adding one HR patch between at least two candidate HR patches that are not already in the current epitome. For each of the two candidate HR patches, the number of blocks in the HR image that are reconstructed by the extended epitome is determined in step 120'. An HR block is reconstructed by the extended epitome when a distance, e.g. L2-norm, between the HR block and a weighted linear combination of k HR patches of the extended HR epitome is below a threshold value, where k is an integer. The reconstruction error may further take into account the coding cost R. The patch (among the at least two candidate patches) for which the determined number is the highest is added in step 122' to the current HR epitome. In a further embodiment, the patch to be added to the current epitome is selected among all patches not already in the current epitome. When a patch of the HR image is added to the current epitome $E_{m-1}$, the co-located patch in the LR image is added to the epitome $E'_m$.

In a specific embodiment, determining (step 120'), for each of the two candidate patches, the number of blocks reconstructed by an extended epitome comprises, for at least one block of the HR image, determining weights and patches of a weighted linear combination of k-nearest neighboring patches to a block in the LR image co-located with the at least one block of the HR image so as to minimize the reconstruction error of the co-located block in the LR image while minimizing the value of k.

In an exemplary embodiment, a patch to be added to the current HR epitome is determined as follows:

$$e_m = \arg\max_{x_i, x_i \notin E_{m-1}} \left[ card \left( \left\| y_j - \sum_k w_k \, kNN_{y'_j}^{coll} \left[ E_{m-1} \cup x_i \right] \right\|_2^2 \le \varepsilon_1 \right) \right] \quad (3)$$

or

$$e_m = \arg\max_{x_i, x_i \notin E_{m-1}} \left[ card \left( \left\| y_j - \sum_k w_k \, kNN_{y'_j}^{coll} \left[ E_{m-1} \cup x_i \right] \right\|_2^2 + \lambda R \le \varepsilon_2 \right) \right]$$

where the weights $w_k$ and patches are determined as follows:

$$\arg\min_{w_k, x'_i \notin E'_{m-1}} \left\| y'_j - \sum_k w_k \, kNN_{y'_j} \left[ E'_{m-1} \cup x'_i \right] \right\|_2^2 + \beta \left\| 1 - \sum_k w_k \right\|_2^2 \quad \text{subject to } \min |k| \quad (4)$$

In the above equations, $e_m$ is the patch to be added to the current epitome, $E_{m-1}$ is the current epitome of the HR image, $E'_{m-1}$ is the current epitome of the LR image, $x_i$ is a candidate patch of the HR image and $x'_i$ is the co-located patch in the LR image, $kNN_{y'_j}$ denotes the k nearest neighboring patches to LR block $y'_j$ extracted from the extended epitome $E'_{m-1} \cup x'_i$ by a kNN search, $kNN_{y'_j}^{coll}$ refers to the k HR patches extracted from the extended epitome $E_{m-1} \cup x_i$ which are co-located with the k nearest neighboring patches $kNN_{y'_j}$, $w_k$ are weights of the weighted linear combination of k-nearest neighboring patches, $\varepsilon_1$ and $\varepsilon_2$ are threshold values, R is a coding cost and $\lambda$, $\alpha$, $\beta$ are Langrangian multipliers. The k-NN search and determination of weights is done on the LR epitome, and then directly transferred to the HR patches. The above minimization problem may be solved by a greedy and iterative method using LLE method (Locally Linear Embedding) or any kind of least squares method.

**Algorithm for solving the above minimization problem**

A k-NN set of $y'_j$ is selected from $\left[E'_{m-1} \cup x'_i\right]$ and weights $w_k$ are calculated as disclosed below. All patches in the epitome $\left[E'_{m-1} \cup x'_i\right]$ are supposed to be represented as column vectors in a set $\{Z_q\}$.

**Input** : $\{Z_q\}$, $y'_j$, K (allowed max number of selected patches)

**Output:** Selected k-NN set A of $y'_j$ and weights w according to optimization (4)

$$\text{Initialization: } k = 0, \; A = [\;], \; e_0 = \left\|y'_j\right\|_2^2$$

$$\text{while } k<K$$

$$k=k+1$$

$$q_k = argmin_q\left\|y'_j - \begin{bmatrix} A & Z_q \end{bmatrix}w\right\|_2^2 + \beta\,\|1 - \textstyle\sum_k w_k\|_2^2$$

$$\text{where } w = [w_1 \; .... \; w_k]^T \text{ and is solved for w with LLE}$$

$$e_k = \left\|y'_j - \begin{bmatrix} A & Z_{q_k} \end{bmatrix}w\right\|_2^2$$

$$\text{if } e_k \geq e_{k-1} \; (or \; alternatively \; e_k \leq \epsilon_5)$$

$$\text{stop while-loop}$$

$$\text{endIf}$$

$$A = \begin{bmatrix} A & Z_{q_k} \end{bmatrix}$$

$$\text{endWhile}$$

return A and the associated weights in w calculated with LLE

The output matrix A contains (in its columns) the k-NN set of $y'_j$ from $\left[E'_{m-1} \cup x'_i\right]$ according to the optimization (4). The co-located k HR patches will be taken from $[E_{m-1} \cup x_i]$ and weights in w are used directly to calculate (3) or its variant.

In equation (4), the first term is representative of a reconstruction error of the block y'$_j$ by its k nearest neighboring patches. The second term is a sum-to-one constraint on the weights w$_k$ which enforces the reconstruction of the blocks to have a pixel range identical to the original pixel range (e.g [0;255]), and also the invariance to translations. The last term (min|k|) imposes to use as few patches as possible (sparsity constraint) to obtain a sparse LR/HR epitome and imposes to use as few patches as possible for the reconstruction of $y'_j$.

The above process may be repeated either until all blocks of the HR image are reconstructed with the above criterion

$$\left\|y_j - \sum_k w_k \, kNN_{y'_j}^{coll}\left[E_{m-1} \cup x_i\right]\right\|_2^2 \leq \varepsilon_2 \text{ or } \left\|y_j - \sum_k w_k \, kNN_{y'_j}^{coll}\left[E_{m-1} \cup x_i\right]\right\|_2^2 + \lambda R), \text{ or until adding new}$$

patches to the current epitome of the HR image does not increase the number of reconstructed blocks.

If all blocks of the HR image are reconstructed according to the above criterion, the method stops with the current epitome. If adding new patches from the HR image to the epitome does not increase the number of reconstructed blocks, the blocks of the HR image not reconstructed with the current epitome are added to this current epitome. In this latter case, repeating texture patterns (which some of them might be unnecessary) may be included in the epitome. They may be eliminated in an optional step wherein the above method is applied using the patches of the current LR/HR epitomes instead of the patches of the LR/HR images.

The constructed epitome may be used in a context of coding or in a context of super-resolution.

In a variant of the second embodiment, instead of adding at step 122' the patch for which the number of reconstructed blocks is the highest, the patch that minimizes a distortion (a mean square error that may further take into account a coding cost R) determined on all the reconstructed HR blocks is added to the epitome.

**Figure 7** represents a flowchart of a method of coding a HR image in a bitstream according to a specific and non-limiting embodiment.

In step 20', an epitome is constructed for the HR image according to the method disclosed with respect to figure 6.

In step 24', a LR version of the HR image and the HR epitome are encoded. Exemplarily, encoding of the LR image and HR epitome comprises prediction and residual coding (i.e. transformation into coefficients, quantization and entropy coding). It will be appreciated, however, that the present principles are not restricted by the way the LR image and the HR epitome are encoded. Padding techniques may also be used to align the epitome on the block grid before coding.

With the method of figure 7 there is no need to encode weights and indices identifying patches since the weights and the patches may be determined on the decoder side from the decoded LR image and an LR epitome. The LR epitome is advantageously determined by taking in the decoded LR image the patches co-located with the patches in the decoded HR epitome. In a variant the LR epitome may be determined by subsampling the HR epitome. Optionally, residuals are encoded, wherein the residuals are computed between the block of the image and a prediction determined from the epitome. Coding the residuals usually comprises transforming them into coefficients (e.g. by applying a DCT), quantizing and entropy coding.

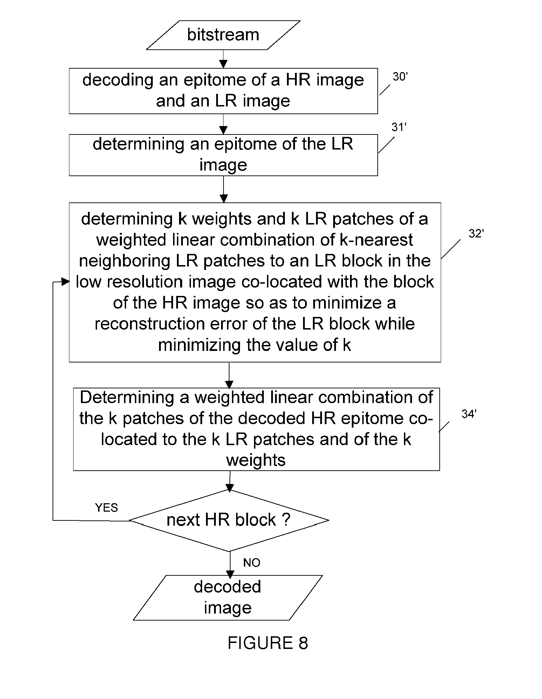

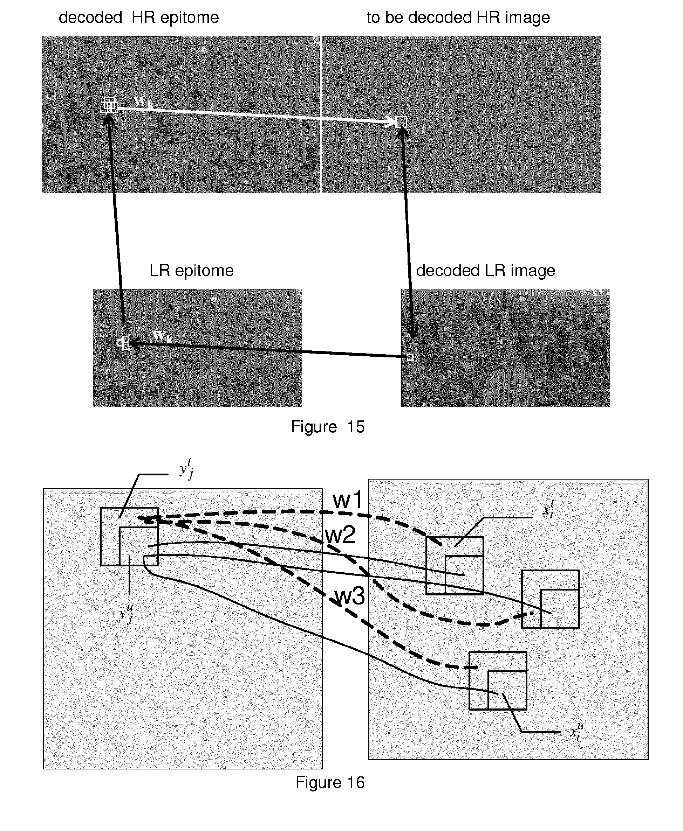

**Figure 8** represents a flowchart of a method of decoding an HR image according to a specific and non-limiting embodiment. **Figure 15** further illustrates the decoding method.

In step 30', an epitome of patches is decoded for an HR image and a LR image (i.e. a LR version of the HR image) is also decoded. This step is the inverse of step 24'. Exemplarily decoding the HR epitome or the LR image comprises decoding residuals (entropy decoding, inverse quantizing and inverse transform) and adding a prediction.

In step 31', an epitome of patches for the LR image is determined from the decoded epitome of patches by taking in the decoded LR image the patches co-located with the patches in the decoded HR epitome.

In step 32', for one block $B_{LR}$ of the LR image co-located with a block $B_{HR}$ of the HR image to be decoded, k patches of the LR epitome and k weights are determined. The k patches and the weights are determined from the decoded LR image and from the epitome of patches of said LR image by applying equation (4). The weights and the patches are determined so as to minimize the reconstruction error of the block $B_{LR}$ while minimizing the value of k.

In step 34', for the block $B_{HR}$ of the HR image co-located with $B_{LR}$, a weighted linear combination of the patches of the decoded HR epitome co-located with the LR patches (i.e. those determined at step 34') and of the weights (those determined at step 34') is determined, the weighted linear combination of the HR patches forming the decoded block in the HR image. Optionally, residuals may be added to the weighted linear combination of the k patches if it was encoded, the weighted linear combination of the k patches added to the residuals forming the decoded block.

The steps 32' and 34' may be repeated with a next block until the whole HR image is decoded.

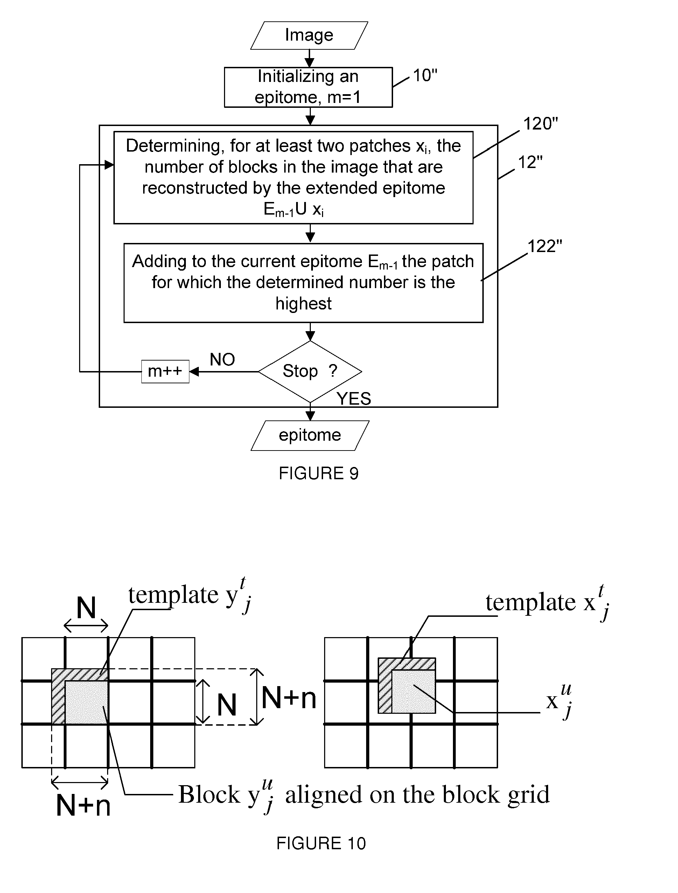

**Figure 9** represents a flowchart of a method for constructing an epitome of an image according to a third specific and non-limiting embodiment. The method start with an empty epitome $E_0$ that is progressively filled with patches taken from the image. The epitome has the same spatial resolution as the image. In the following a block $y_j$ is an (N+n)*(N+n) block in which the NxN part is a block $y_j^u$ aligned with the block grid, namely the block grid as defined by a block-based encoding algorithm. $y_j$ even if not aligned with the block grid is called a block because it comprises a block aligned on the block grid. The remaining part $y_j^t$ of the block $y_j$ is called a template. The block $y_j^u$ is the block adjacent to the template $y_j^t$. In the same way, a patch $x_i$ is an (N+n)*(N+n) patch in which the NxN part is a patch $x_i^u$ aligned with the pixel grid. The remaining part $x_i^t$ of the patch $x_i$ is called a template. The patch $x_i^u$ is the patch adjacent to the template $x_i^t$. Such blocks and patches are represented on **figure 10.**

In step 10", an epitome is initialized by at least one patch $x_i$ aligned on the pixel grid of the image. The epitome may be initialized by a specific patch of the image, e.g. a center patch. In a variant, the epitome is initialized by a patch that reconstructs a maximum number of blocks in the image. A block is reconstructed by a patch in the case where a distance, e.g. L2 norm, between the block and the patch is below a threshold value. The distance is representative of the similarity between the block and the patch. The smaller the distance, the more similar the block and the patch. In an exemplary embodiment, the epitome is initialized by the patch $e_1$ determined as follows:

$$e_1 = \arg\max_{x_i} \left[ card \left( \left\| y_j^u - x_i^u \right\|_2^2 \leq \varepsilon_1 \right) \right] \text{ subject to } \left\| y_j^t - x_i^t \right\|_2^2 \leq \varepsilon_2'$$

or

$$e_1 = \arg\max_{x_i} \left[ card\left( \left\| y_j^u - x_i^u \right\|_2^2 + \lambda R \le \varepsilon_2 \right) \right] \text{ subject to } \left\| y_j^t - x_i^t \right\|_2^2 \le \varepsilon_2'$$

where $y_j^u$ is a block, $y_j^t$ is a template associated with $y_j^u$, $x_i^u$ is a patch, $x_i^t$ is a template associated with $x_i^u$, $\varepsilon_1$, $\varepsilon_2$ and $\varepsilon_2'$ are threshold values, R is a coding cost and $\lambda$ is a Lagrangian multiplier. Specifically R is the cost (i.e. in terms of bitrate) of residual encoding. Indeed, in addition to the epitome residuals may be encoded. A residual is a difference between an original pixel value and its prediction value, i.e. its prediction value is determined from the epitome. Coding the residuals usually comprises transforming them into coefficients (e.g. by applying a DCT), quantizing the coefficients and entropy coding the quantized coefficients. R may thus be estimated from the number of non-zero quantized coefficients as R=6.5*M where M is the number of non-zero quantized coefficients. The optimum value of $\lambda$ is a function of the uniform quantization step-size applied on the coefficients. It will be appreciated, however, that the present principles are not restricted to the L2-norm. Therefore, in the above equation L2-norm may be replaced by another distance. Card() is a function that gives the number of blocks $y_j^u$ that verify the inequality in the parenthesis. Basically, the epitome is initialized by the patch $x_i$ (formed of the patch $x_i^u$ and its template $x_i^t$) that reconstructs the highest number of blocks $y_j^u$ in the image with template matching. A block $y_j^u$ is reconstructed by a patch $x_i^u$ when one of the above inequality is satisfied. It will be appreciated, however, that the present principles are not restricted to any specific method of initialization.

In step 12", the epitome is extended. Epitome extension is an iterative process. During one iteration m, one patch of the image is added to the current epitome $E_{m-1}$, i.e. the epitome determined at previous iteration. Extending the epitome comprises adding to the current epitome one patch between at least two candidate patches that are not already in the current epitome. For each of the two candidate patches, the number of blocks in the image that are reconstructed by the extended epitome is determined in step 120". A block is reconstructed by the extended epitome when a distance between the block and a weighted linear combination of k patches of the extended epitome is below a threshold value, where k is an integer. The reconstruction error may further take into account the coding cost R. The patch (among the at least two patches) for which the determined number is the highest is added to the current epitome in step 122". In a further embodiment, the patch to be added to the current epitome is selected among all the patches not in the current epitome.

In a specific embodiment, determining for each of at least two patches the number of blocks reconstructed by an extended epitome comprises, for at least one block of the image, determining weights and templates of a weighted linear combination of k-nearest neighboring templates of a template adjacent to the at least one block of the image so as to minimize the reconstruction error of this adjacent template while minimizing the value of k.

In an exemplary embodiment, a patch $e_m$ from the image to be added to the current epitome $E_{m-1}$ is determined as follows:

$$e_m = \arg\max_{x_i, x_i \notin E_{m-1}} \left[ card\left( \left\| y_j^u - \sum_k w_k \, kNN_{y_j^t}^{coll} \left[ E_{m-1}^u \cup x_i^u \right] \right\|_2^2 \le \varepsilon_1 \right) \right] \quad (5)$$

or

$$e_m = \arg\max_{x_i, x_i \notin E_{m-1}} \left[ card\left( \left\| y_j^u - \sum_k w_k \, kNN_{y_j^t}^{coll} \left[ E_{m-1}^u \cup x_i^u \right] \right\|_2^2 + \lambda R \le \varepsilon_2 \right) \right]$$

where the weights $w_k$ and templates are determined as follows:

$$\arg\min_{w_k} \left\| y_j^t - \sum_k w_k \ kNN_{y_j^t} \left[ E_{m-1}^t \cup x_i^t \right] \right\|_2^2 + \beta \left\| 1 - \sum_k w_k \right\|_2^2 \text{ subject to } \min |k| \quad (6)$$

In the above equations, $e_m$ is the patch to be added, $E_{m-1}$ is the current epitome containing selected (N+n)x(N+n) patches, $E_{m-1}^u$ is the part current epitome $E_{m-1}$ formed of the patches $\{x_i^u\}$, $E_{m-1}^t$ is the part current epitome $E_{m-1}$ formed of the templates $\{x_i^t\}$, $kNN_{y_j^t}$ denotes the k-nearest neighboring templates to the template $y_j^t$ (the k-nearest neighboring templates are determined from the patch-set $\left[ E_{m-1}^t \cup x_i^t \right]$), $kNN_{y_j^t}^{coll}$ refers to the k patches spatially-adjacent to the k nearest neighbors to template $y_j^t$, $w_k$ are weights of the weighted linear combination of k-nearest neighboring templates, $\varepsilon_1$ and $\varepsilon_2$ are threshold values, R is an coding cost and α, β and λ are Lagrangian multipliers.

In other words, at each single step, the patch $x_i$ (that is not already in the epitome) maximizing the number of reconstructed blocks through weighted template matching is determined and added in the epitome. The k-NN search and determination of weights is done on the templates, and then directly transferred to the patches $x_i^u$.

The above minimization problem may be solved by a greedy and iterative method using LLE method (Locally Linear Embedding) or any kind of least squares method.

**Algorithm for solving the above minimization problem**

A k-NN set of $y_j^t$ from $[E_{m-1}^t \cup x_i^t]$ and calculate weights $w_k$ in the following. All templates in the epitome $[E_{m-1}^t \cup x_i^t]$ are supposed to be represented as column vectors in a set $\{Z_q\}$.

**Input** : $\{Z_q\}$, $y_j^t$, K (allowed max number of selected patches/templates)

Output: Selected k-NN set A of $y_j^t$ and weights w according to optimization (6)

Initialization: $k = 0$, $A = [\ ]$, $e_0 = \left\| y_j^t \right\|_2^2$

while k<K

k=k+1

$q_k = argmin_q \left\| y_j^t - \begin{bmatrix} A & Z_q \end{bmatrix} w \right\|_2^2 + \beta \ \| 1 - \sum_k w_k \|_2^2$

where $w = [w_1 \ .... w_k]^T$ and is solved for w with LLE

$e_k = \left\| y_j^t - \begin{bmatrix} A & Z_{q_k} \end{bmatrix} w \right\|_2^2$

if $e_k \geq e_{k-1} \ (or \ alternatively \ e_k \leq \epsilon_6)$

stop while-loop

endIf

$A = \begin{bmatrix} A & Z_{q_k} \end{bmatrix}$

endWhile

return A and the associated weights in w calculated with LLE

The output matrix A contains (in its columns) the k-NN set of $y_j^t$ from $\left[E_{m-1}^t \cup x_i^t\right]$ according to the optimization (6). The adjacent k patches will be taken from $\left[E_{m-1}^u \cup x_i^u\right]$ and weights in w are used directly to calculate (5) or its variant.

The above process may be repeated until either all blocks are reconstructed with the above criterion

$$\left(\left\|y_j^u - \sum_k w_k \, kNN_{y_j^t}^{coll}\left[E_{m-1}^u \cup x_i^u\right]\right\|_2^2 \le \varepsilon_1 \text{ or } \left\|y_j^u - \sum_k w_k \, kNN_{y_j^t}^{coll}\left[E_{m-1}^u \cup x_i^u\right]\right\|_2^2 + \lambda R \le \varepsilon_2\right), \text{ or until adding}$$

new patches to the current epitome does not increase the number of reconstructed blocks.

If all blocks of the image are reconstructed according to the above criterion, the method stops with the current epitome. If adding new patches from the image to the epitome does not increase the number of reconstructed blocks, the blocks of the image not reconstructed with the current epitome are added to this current epitome.

A refinement process optionally may be performed using the patches of the current epitome instead patches from the image (with the same procedure as described above). In this latter case, repeating texture patterns (which some of them might be unnecessary) may be included in the epitome. They may be eliminated in an optional step wherein the above method is applied using the patches of the current epitome instead of the patches of the image.

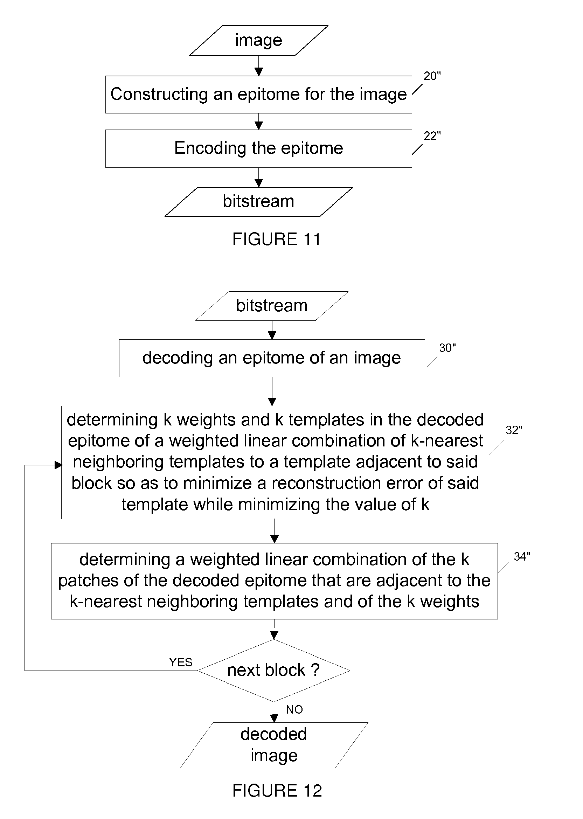

**Figure 11** represents a flowchart of a method of coding an image in a bitstream according to a specific and non-limiting embodiment.

In step 20", an epitome is constructed for the image according to the method disclosed with respect to figure 9.

In step 24", the epitome is encoded. The epitome may be encoded using block-based encoding. Block-based encoding may comprise block prediction and residual coding (transform, quantization and entropy coding). The epitome may be block aligned before coding using padding techniques. It will be appreciated, however, that the present principles are not restricted by the way the epitome is encoded.

With the method of figure 11, there is no need to encode weights and indices identifying patches since the weights and the patches may be determined on the decoder side from the templates in the same way as in the encoder side. Indeed, template is chosen so that it is decoded before the block it is adjacent to. Therefore, when the blocks are encoded in a raster scan order, a template is usually located top-left to the block it is adjacent to. Therefore, when decoding the block, the template is available.

Optionally, residuals are encoded, wherein the residuals are computed between the block of the image and a prediction determined from the epitome. Coding the residuals usually comprises transforming them into coefficients (e.g. by applying a DCT), quantizing and entropy coding.

**Figure 12** depicts a flowchart of a method for decoding an image according to a specific and non-limiting embodiment. **Figure 16** further illustrates the decoding method.

In step 30", an epitome of patches is decoded. This step is inverse of step 24".

In step 32", for one template $y_j^t$ adjacent to a block $y_j^u$ of the image to be decoded, k templates of the decoded epitome and k weights are determined. The k templates and the k weights are determined from the epitome by applying equation (6). The weights and the templates are thus determined so as to minimize the reconstruction error of the template $y_j^t$ while minimizing the value of k.

In step 34"', for the at least one block $y_j^u$, a weighted linear combination of k patches of the decoded epitome adjacent to the k templates (i.e. those determined at step 32") and of the k weights (those determined at step 34') is determined, the weighted linear combination of the patches forming the decoded block. Optionally, residuals may be added to the weighted linear combination of the k patches if it was encoded, the weighted linear combination of the k patches added to the residuals forming the decoded block. The weights are those determined at step 32" and the patches are $kNN_{y_j^t}^{coll}$, i.e. the k patches spatially adjacent to the k nearest neighbors to template $y_j^t$ as depicted on **Figure 16**. On this figure the weights w1, w2 and w3 are determined from the templates, namely the k- nearest neighbors $x_i^t$ to template $y_j^t$ and used to decode the block $y_j^u$ which is a weighted linear combination of the blocks $x_i^u$ adjacent to the k- nearest neighbors $x_i^t$.

The steps 32"' and 34" may be repeated until the whole image is decoded.

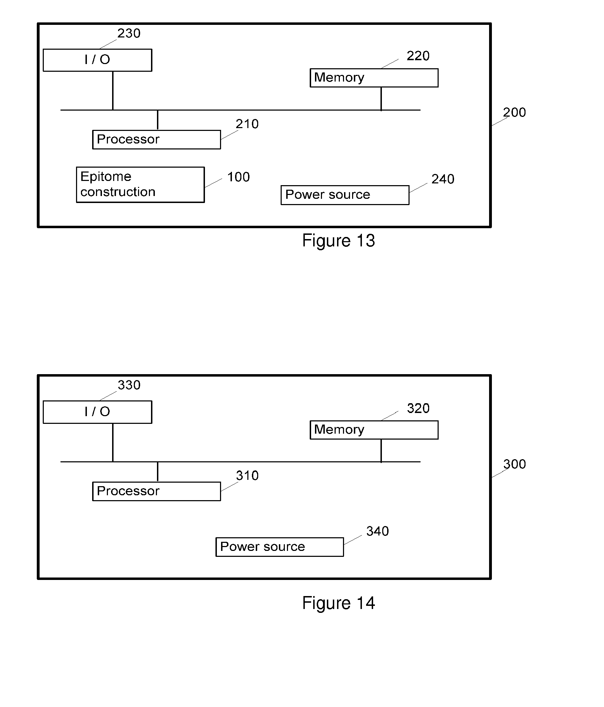

**Figure 13** represents an exemplary architecture of an encoding device 200 configured to encode an image into a bitstream according to an exemplary and non-limiting embodiment. The device 200 advantageously comprises a device 100 configured to construct an epitome of the image. The encoding device 200 comprises one or more processor(s) 210, which could comprise, for example, a CPU, a GPU and/or a DSP (English acronym of Digital Signal Processor), along with internal memory 220 (e.g. RAM, ROM, and/or EPROM). The encoding device 200 comprises one or more Input/Output interface(s) 230, each adapted to display output information and/or allow a user to enter commands and/or data (e.g. a keyboard, a mouse, a touchpad, a webcam); and a power source 240 which may be external to the encoding device 200. The encoding device 200 may also comprise one or more network interface(s) (not shown). The image may be obtained from a source. In an exemplary embodiment, the components (processors, memory, etc) of the device 100 may be merged with similar components of the encoding device. According to different embodiments, the source can be, but is not limited to:

- a local memory, e.g. a video memory, a RAM, a flash memory, a hard disk ;
- a storage interface, e.g. an interface with a mass storage, a ROM, an optical disc or a magnetic support;
- a communication interface, e.g. a wireline interface (for example a bus interface, a wide area network interface, a local area network interface) or a wireless interface (such as a IEEE 802.11 interface or a Bluetooth interface); and
- an image capturing circuit (e.g. a sensor such as, for example, a CCD (or Charge-Coupled Device) or CMOS (or Complementary Metal-Oxide-Semiconductor)).

According to different embodiments, the bistream may be sent to a destination. As an example, the bitstream is stored in a remote or in a local memory, e.g. a video memory or a RAM, a hard disk. In a variant, the bitstream is sent to a storage interface, e.g. an interface with a mass storage, a ROM, a flash memory, an optical disc or a magnetic support and/or transmitted over a communication interface, e.g. an interface to a point to point link, a communication bus, a point to multipoint link or a broadcast network.

According to an exemplary and non-limiting embodiment, the encoding device 200 further comprises a computer program stored in the memory 220. The computer program comprises instructions which, when executed by the encoding device 200, in particular by the processor 210, enable make the encoding device 200 to execute any of the encoding methods described with reference to figure 4 or 7 or 11. According to a variant, the computer program is stored externally to the encoding device 200 on a non-transitory digital data support, e.g. on an external storage medium such as a HDD, CD-ROM, DVD, a read-only and/or DVD drive and/or a DVD Read/Write drive, all known in the art. The encoding encoding device 200 thus comprises a mechanism to read the computer program. Further, the encoding encoding device 200 could access one or more Universal Serial Bus (USB)-type storage devices (e.g., "memory sticks.") through corresponding USB ports (not shown).

According to exemplary and non limiting embodiments, the encoding device 200 can be, but is not limited to:

- a mobile device ;
- a communication device ;
- a game device ;
- a tablet (or tablet computer) ;
- a laptop ;
- a still image camera;
- a video camera ;
- an encoding chip;
- a still image server; and
- a video server (e.g. a broadcast server, a video-on-demand server or a web server).

**Figure 14** represents an exemplary architecture of a decoding device 300 configured to decode an image from a bitstream according to an exemplary embodiment. The decoding device 300 comprises one or more processor(s) 310, which is(are), for example, a CPU, a GPU and/or a DSP (English acronym of Digital Signal Processor), along with internal memory 320 (e.g. RAM, ROM, EPROM). The decoding device 300 comprises one or several Input/Output interface(s) 330 adapted to display output information and/or allow a user to enter commands and/or data (e.g. a keyboard, a mouse, a touchpad, a webcam); and a power source 340 which may be external to the decoding device 300. The device 300 may also comprise network interface(s) (not shown). The bitstream may be obtained from a source. According to different embodiments, the source can be, but not limited to:

- a local memory, e.g. a video memory, a RAM, a flash memory, a hard disk ;
- a storage interface, e.g. an interface with a mass storage, a ROM, an optical disc or a magnetic support;
- a communication interface, e.g. a wireline interface (for example a bus interface, a wide area network interface, a local area network interface) or a wireless interface (such as a IEEE 802.11 interface or a Bluetooth interface); and
- an image capturing circuit (e.g. a sensor such as, for example, a CCD (or Charge-Coupled Device) or CMOS (or Complementary Metal-Oxide-Semiconductor)).

According to different embodiments, the decoded image may be sent to a destination, e.g. a display device. As an example, the decoded image is stored in a remote or in a local memory, e.g. a video memory or a RAM, a hard disk. In a variant, the decoded image is sent to a storage interface, e.g. an interface with a mass storage, a ROM, a flash memory, an optical disc or a magnetic support and/or transmitted over a communication interface, e.g. an interface to a point to point link, a communication bus, a point to multipoint link or a broadcast network.

According to an exemplary and non-limiting embodiment, the decoding device 300 further comprises a computer program stored in the memory 320. The computer program comprises instructions which, when executed by the decoding device 300, in particular by the processor 310, make the decoding device 300 carry out any of the decoding methods described with reference to figure 5, 8 or 12. According to a variant, the computer program is stored externally to the decoding device 300 on a non-transitory digital data support, e.g. on an external storage medium such as a HDD, CD-ROM, DVD, a read-only and/or DVD drive and/or a DVD Read/Write drive, all known in the art. The decoding device 300 thus comprises an interface to read the computer program. Further, the decoding device 300 could access one or more Universal Serial Bus (USB)-type storage devices (e.g., "memory sticks.") through corresponding USB ports (not shown).

According to exemplary and non-limiting embodiments, the decoding device 300 can be, but not limited to:

- a mobile device ;
- a communication device ;
- a game device ;
- a set top box;
- a TV set;
- a tablet (or tablet computer) ;
- a laptop ;
- a display and
- a decoding chip.

In variant, the methods described above may be applied on blocks and patches whose mean value is subtracted instead of the original blocks and patches. In another variant, the patches in the image are classified into regions (e.g. using K-means clustering algorithm). The epitome is then derived by applying one of the above methods independently on each of the regions. In a specific embodiment, the value of k is superior to or equal to 2, i.e. $k>1$.

The implementations described herein may be implemented in, for example, a method or a process, an apparatus, a software program, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Implementations of the various processes and features described herein may be embodied in a variety of different equipment or applications, particularly, for example, equipment or applications. Examples of such equipment include an encoder, a decoder, a post-processor processing output from a decoder, a pre-processor providing input to an encoder, a video coder, a video decoder, a video codec, a web server, a set-top box, a laptop, a personal computer, a cell phone, a PDA, and other communication devices. As should be clear, the equipment may be mobile and even installed in a mobile vehicle.

Additionally, the methods may be implemented by instructions being performed by a processor, and such instructions (and/or data values produced by an implementation) may be stored on a processor-readable medium such as, for example, an integrated circuit, a software carrier or other storage device such as, for example, a hard disk, a compact diskette ("CD"), an optical disc (such as, for example, a DVD, often referred to as a digital versatile disc or a digital video disc), a random access memory ("RAM"), or a read-only memory ("ROM"). The instructions may form an application program tangibly embodied on a processor-readable medium. Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry as data the rules for writing or reading the syntax of a described embodiment, or to carry as data the actual syntax-values written by a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

**Claims**

1. A method of construction of an epitome of an image comprising at least one iteration of:

   - determining (120, 120', 120") for each of at least two patches of said image the number of blocks of said image reconstructed by an extended epitome formed by a current epitome and the patch, wherein a block is reconstructed by the extended epitome when a distance between the block and a weighted linear combination of patches of the extended epitome is below a threshold value;
   - adding (122, 122', 122") to the current epitome the patch, among the at least two patches, that reconstructs the highest number of blocks.

2. The method of claim 1, wherein determining for each of at least two patches of said image the number of blocks of said image reconstructed by the extended epitome comprises, for at least one block of the image, determining k weights and k patches of a weighted linear combination of k-nearest neighboring patches to said at least one block of the image so as to minimize a reconstruction error of said at least one block of the image while minimizing the value of k, where k is an integer.

3. The method of claim 1, wherein said image being a high resolution image, determining for each of at least two patches of said high resolution image the number of blocks of said high resolution image reconstructed by the extended epitome comprises, for at least one block of the high resolution image, determining k weights and k patches of a weighted linear combination of k-nearest neighboring patches to an LR block in a low resolution image co-located with said at least one block of the high resolution image so as to minimize a reconstruction error of said LR block while minimizing the value of k, said low resolution image being a low resolution version of said high resolution image and k being an integer.

4. The method of claim 1, wherein determining for each of at least two patches of said image the number of blocks of said image reconstructed by the extended epitome comprises, for at least one block of the image, determining k weights and k templates of a weighted linear combination of k-nearest neighboring templates to a template adjacent to said at least one block of the image so as to minimize a reconstruction error of said template while minimizing the value of k, where k is an integer.

5. A method of coding comprising:

   - constructing (20) an epitome of an image according to the method according to any of claims 1 to 4; and
   - encoding (22) the epitome.

6. The method of coding according to claim 5, wherein the image being a high resolution image, the method further comprises encoding a low resolution version of the high resolution image.

7. The method of coding according to claim 5, wherein constructing an epitome of an image is done according to the method of claim 1 or 2 and wherein the method of coding further comprises for at least one block:

- determining k patches in the epitome and k weights of a weighted linear combination of k-nearest neighboring patches to said block so as to minimize a reconstruction error of said at least one block while minimizing the value of k, where k is an integer; and
- encoding the k weight and k indices identifying the k patches of said weighted linear combination.

8. A method of decoding comprising:

- decoding (30, 30', 30") an epitome of patches representative of an image;
- determining (32, 32', 32"), for at least one block of said image, k weights and k patches of the decoded epitome, wherein k is an integer; and
- determining (34, 34', 34") a weighted linear combination of the k patches using the k weights, the weighted linear combination of the k patches forming the decoded block.

9. The method of claim 8, wherein determining, for at least one block of said image, k weights and k patches of the decoded epitome comprises decoding said k weights and k indices identifying said k patches from a bitstream.

10. The method of claim 8, wherein determining, for at least one block of said image, k weights and k patches of the decoded epitome comprises :

- determining k weights and k templates of a weighted linear combination of k-nearest neighboring templates of the decoded epitome to a template adjacent to said at least one block of said image so as to minimize a reconstruction error of said template while minimizing the value of k;
- determining k patches in the decoded epitome adjacent to said k-nearest neighboring templates, said patches forming the k patches.

11. The method of claim 8, wherein said image being a high resolution image, said method further comprises:

- decoding a low resolution image being a low resolution version of said high resolution image ;
- determining an LR epitome of patches for the low resolution image from said decoded epitome of patches;

wherein determining, for at least one block of said high resolution image, k weights and k patches of the decoded epitome comprises:

- determining k weights and k patches of a weighted linear combination of k-nearest neighboring patches to an LR block in the low resolution image co-located with said at least one block of the high resolution image so as to minimize a reconstruction error of said LR block while minimizing the value of k; and
- determining k patches in the decoded epitome co-located to said k LR patches, said patches forming the k patches.

12. A device for constructing an epitome of an image, the device comprises at least one processor configured to:

- determine for each of at least two patches of said image the number of blocks of said image reconstructed by an extended epitome formed by a current epitome and the patch, wherein a block is reconstructed by the extended epitome when a distance between the block and a weighted linear combination of patches of the extended epitome is below a threshold value; and
- add to the current epitome the patch, among the at least two patches, that reconstructs the highest number of blocks.

13. A coding device comprising a device for constructing an epitome according to claim 12, wherein the at least one processor is further configured to encode the epitome.

14. A decoding device comprising at least one processor configured to:

- decode an epitome of patches representative of an image;
- determine, for at least one block of said image, k weights and k patches of the decoded epitome, wherein k is an integer; and
- determine a weighted linear combination of the k patches using the k weights, the weighted linear combination of the patches forming the decoded block.

Patch xi aligned on
the pixel grid

Block yj aligned on
the block grid

FIGURE 1

130

I / O

120

Memory

110

Processor

100

140

Power source

FIGURE 2

FIGURE 3

image

Constructing an epitome — 20

Encoding the epitome — 22

determining k patches and k weights
of a weighted linear combination of k-
nearest neighboring patches so as to
minimize a reconstruction error of the
block while minimizing the value of k — 24

Encoding the k weights and k indices
identifying the k patches of the linear
combination — 26

YES

next block ?

NO

bitstream

FIGURE 4

bitstream

decoding an epitome of patches — 30

decoding k weights and k indices
identifying k patches in the epitome — 32

Determining a weighted linear
combination of the k patches identified
by the indices  and of the k weights — 34

YES      next block ?

NO

decoded
image

FIGURE 5

HR image, LR
image

Constructing an epitome for the HR
image from the HR and LR images — 20'

Encoding the epitome and the LR
image — 22'

bitstream

FIGURE 7

FIGURE 6

bitstream

decoding an epitome of a HR image and an LR image  /30'

determining an epitome of the LR image  /31'

determining k weights and k LR patches of a weighted linear combination of k-nearest neighboring LR patches to an LR block in the low resolution image co-located with the block of the HR image so as to minimize a reconstruction error of the LR block while minimizing the value of k  /32'

Determining a weighted linear combination of the k patches of the decoded HR epitome co-located to the k LR patches and of the k weights  /34'

YES

next HR block ?

NO

decoded image

FIGURE 8

Image

Initializing an
epitome, m=1 — 10"

120"

Determining, for at least two patches $x_i$, the
number of blocks in the image that are
reconstructed by the extended epitome
$E_{m-1} \cup x_i$

12"

Adding to the current epitome $E_{m-1}$ the patch
for which the determined number is the
highest — 122"

m++ ◄ NO ◄ Stop ?

YES

epitome

FIGURE 9

template $y^t_j$

N

$N$ $N+n$

N+n Block $y^u_j$ aligned on the block grid

template $x^t_j$

$x^u_j$

FIGURE 10

image

Constructing an epitome for the image  ⟋ 20"

Encoding the epitome  ⟋ 22"

bitstream

FIGURE 11

bitstream

decoding an epitome of an image  ⟋ 30"

determining k weights and k templates in the decoded epitome of a weighted linear combination of k-nearest neighboring templates to a template adjacent to said block so as to minimize a reconstruction error of said template while minimizing the value of k  ⟋ 32"

determining a weighted linear combination of the k patches of the decoded epitome that are adjacent to the k-nearest neighboring templates and of the k weights  ⟋ 34"

YES  ◇ next block ?

NO

decoded image

FIGURE 12

230

I / O

220

Memory

200

210

Processor

Epitome
construction
100

Power source
240

Figure 13

330

I / O

320

Memory

300

310

Processor

Power source
340

Figure 14

decoded HR epitome                    to be decoded HR image

LR epitome                            decoded LR image

Figure 15

Figure 16

Europäisches
Patentamt

European
Patent Office

Office européen
des brevets

# EUROPEAN SEARCH REPORT

Application Number

EP 15 30 5028

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WANG H ET AL: "Factoring repeated content within and among images", ACM SIGGRAPH 2008 PAPERS (SIGGRAPH '08, LOS ANGELES), NEW YORK, NY, USA, 11 August 2008 (2008-08-11), pages 1-10, XP002636385, * section 4 * * section 5.2 * | 1-14 | INV. H04N19/105 H04N19/176 H04N19/593 H04N19/154 H04N19/192 |
| Y | CHERIGUI S ET AL: "Correspondence Map-Aided Neighbor Embedding for Image Intra Prediction", IEEE TRANSACTIONS ON IMAGE PROCESSING, IEEE SERVICE CENTER, PISCATAWAY, NJ, US, vol. 22, no. 3, 1 March 2013 (2013-03-01), pages 1161-1174, XP011498220, ISSN: 1057-7149, DOI: 10.1109/TIP.2012.2227772 * section II.A * * section III * * section IV * | 1-14 | |
| Y | EP 2 615 832 A1 (THOMSON LICENSING [FR]; INST NAT RECH INF AUTOMAT [FR]) 17 July 2013 (2013-07-17) * paragraph [0030] - paragraph [0037] * | 1-14 | TECHNICAL FIELDS SEARCHED (IPC) H04N |
| Y | SAFA CHERIGUI ET AL: "Epitome-based image compression using translational sub-pel mapping", MULTIMEDIA SIGNAL PROCESSING (MMSP), 2011 IEEE 13TH INTERNATIONAL WORKSHOP ON, IEEE, 17 October 2011 (2011-10-17), pages 1-6, XP032027526, DOI: 10.1109/MMSP.2011.6093786 ISBN: 978-1-4577-1432-0 * sections II and III * | 1-14 | |

-/--

The present search report has been drawn up for all claims

| Place of search | Date of completion of the search | Examiner |
|---|---|---|
| The Hague | 8 July 2015 | Ferré, Pierre |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 15 30 5028

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | TURKAN MEHMET ET AL: "Optimized neighbor embeddings for single-image super-resolution", 2013 IEEE INTERNATIONAL CONFERENCE ON IMAGE PROCESSING, IEEE, 15 September 2013 (2013-09-15), pages 645-649, XP032565595, DOI: 10.1109/ICIP.2013.6738133 [retrieved on 2014-02-11] * section 2.1 * | 1-14 | |
| A | JOJIC ET AL: "Epitomic analysis of appearance and shape", PROCEEDINGS OF THE EIGHT IEEE INTERNATIONAL CONFERENCE ON COMPUTER VISION. (ICCV). NICE, FRANCE, OCT. 13 - 16, 2003; [INTERNATIONAL CONFERENCE ON COMPUTER VISION], LOS ALAMITOS, CA : IEEE COMP. SOC, US, 13 October 2003 (2003-10-13), pages 34-41vol.1, XP031213027, ISBN: 978-0-7695-1950-0 * the whole document * | 1-14 | |
| A | HONG CHANG ET AL: "Super-resolution through neighbor embedding", PROCEEDINGS OF THE 2004 IEEE COMPUTER SOCIETY CONFERENCE ON COMPUTER VISION AND PATTERN RECOGNITION 27 JUNE-2 JULY 2004 WASHINGTON, DC, USA, IEEE, PROCEEDINGS OF THE 2004 IEEE COMPUTER SOCIETY CONFERENCE ON COMPUTER VISION AND PATTERN RECOGNITION IEE, 27 June 2004 (2004-06-27), page I, XP032396518, DOI: 10.1109/CVPR.2004.1315043 ISBN: 978-0-7695-2158-9 * the whole document * | 1-14 | TECHNICAL FIELDS SEARCHED (IPC) |

The present search report has been drawn up for all claims

| Place of search | Date of completion of the search | Examiner |
|---|---|---|
| The Hague | 8 July 2015 | Ferré, Pierre |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

Europäisches
Patentamt

European
Patent Office

Office européen
des brevets

Application Number

EP 15 30 5028

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☒ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION
SHEET B**

Application Number

EP 15 30 5028

The Search Division considers that the present European patent application does not comply with the requirements of unity of invention and relates to several inventions or groups of inventions, namely:

    1. claims: 1-14

        multiple patches epitomes based encoding with epitome
        construction

    1.1. claims: 1-7, 12, 13

        How to improve the selection of patches when constructing an
        epitome

    1.2. claims: 8-11, 14

        How to improve the encoding/decoding when using an epitome
                            ---

Please note that all inventions mentioned under item 1, although not
necessarily linked by a common inventive concept, could be searched
without effort justifying an additional fee.

## ANNEX TO THE EUROPEAN SEARCH REPORT
## ON EUROPEAN PATENT APPLICATION NO.

EP 15 30 5028

This annex lists the patent family members relating to the patent documents cited in the above-mentioned European search report.
The members are as contained in the European Patent Office EDP file on
The European Patent Office is in no way liable for these particulars which are merely given for the purpose of information.

08-07-2015

| Patent document cited in search report | | Publication date | Patent family member(s) | | Publication date |
|---|---|---|---|---|---|
| EP 2615832 | A1 | 17-07-2013 | CN | 104067616 A | 24-09-2014 |
| | | | EP | 2615832 A1 | 17-07-2013 |
| | | | EP | 2803192 A1 | 19-11-2014 |
| | | | JP | 2015503877 A | 02-02-2015 |
| | | | KR | 20140120887 A | 14-10-2014 |
| | | | US | 2014355898 A1 | 04-12-2014 |
| | | | WO | 2013104585 A1 | 18-07-2013 |

EPO FORM P0459

For more details about this annex : see Official Journal of the European Patent Office, No. 12/82